# EUROPEAN PATENT SPECIFICATION

(11) **EP 1 013 870 B1**
(45) Date of publication and mention of the grant of the patent: **26.10.2005**
(21) Application number: 99125147.1
(22) Date of filing: 16.12.1999
(51) Int. Cl.: E06B 9/13, E06B 9/62, B65G 69/00

(54) **Arrangement at a loading and unloading exit sealing**
Vorrichtung für Abdichtung des Be- und Entladeausganges
Système de l'étanchement pour le sortie de chargement et déchargement

(30) Priority: 16.12.1998 SE 9804380
(43) Date of publication of application: 28.06.2000
(73) Proprietor: ALTEN GERÄTEBAU GMBH, D-30974 Wennigsen (DE)
(72) Inventor: Winstedt, Karl-Erik, 26252 Ängelholm (SE)
(74) Representative: Depmeyer, Jochen

(56) References cited:
- EP-A- 0 334 978
- DE-A- 4 317 054
- US-A- 3 665 997
- US-A- 4 554 768
- US-A- 4 750 299
- US-A- 5 758 705

## Description

The present invention relates to an arrangement at a weather-seal for a loading-/unloading opening in a building or a warehouse, comprising an upper portion as well as two side portions, which are adjustable with regard to its extension for the purpose to adapt the opening to the form of a rear portion of a load carrier, such as the super structure/cover thereof, or a trailer of such a vehicle with a loading/unloading opening. The upper portion of the weather seal comprises a screen that is containable on a cylinder in a roll-up fashion, in the lower end area of which one or more weight elements are confined.

The reason why weather seals as such have been construed, is that there has been a wish to shut off the environment, that areas in the vicinity of a loading or an unloading operation constitute from the influence of the wind, rain, heat, or cold. The reason thereto can be found both in the fact that it is wished to protect goods transported from the environment, and in that by such a shut off large amounts of energy can be saved as a consequence of a reduced contact with the environment.

Both almost new as well as elder kinds of load carriers to a differing extent suffer from the fact that they get different free height depending on the actual load. This leads to problems, inter alia of an economical kind, in that e.g. a lorry provided with a cover, when driving gets a flow profile that is changed. The consequence is turbulent flow phenomena and as a consequence thereof a higher fuel consumption. On lorries of today efforts have been made to deal with these problems by using different kinds of air suspension systems, which solve the related problems.

Existing air suspension systems do, however, not solve problems that arise when loading and unloading of a load carrier and in connection therewith arising varying road clearance in connection with weather seals of the above kind. The chassis of a lorry, which e.g. arrives empty at a loading sight, will successively sink in such a way (also those provided with air suspension), that if measures are not taken regarding a weather seal present, an opening will evolve between the upper part of the cover, and the upper parts of the weather seal.

Weather seals of the present kind are normally power driven, which means that the solution of the problem might be an establishment of a constant survey of whether air gap, has arisen between the upper parts of the weather seal and the load cover respectably, as well as powering the engine distances that would be infinitesimal. Except that this problem is rather difficult to solve, there are too many reliability aspects that indicate that such a solution would not be efficient, not least since equipment of the kind like weather seals, simply is to work, especially when the circumstances are the worst imaginable, and with a minimum of maintenance.

DE 43 17 054 A1 shows an arrangement with weights on the lower side of the weather seal but no counterweight. From US-A-5 758 705 is known a dock seal assembly with counterweights. These have the same or a higher weight of the screen.

Therefore, it is an object with the present invention to attain an arrangement that, in a simple and yet reliable way, can prevent said air gap from evolving. The object also comprises that the solution is to be able to take care of necessary movements, both upwards and downwards when a chassis is raised or lowered.

According to the invention the weather seal has a counteracting force which counteracts the weight or the weights of the screen and one or more weight/s at the lower edge of the screen. The screen and the weight elements are so outbalanced by the counter acting force on the cylinder, that the screen without being effected by force from the outside will strive towards becoming unrolled in its full length, whereby since the lorry or load carrier once is arranged under the screen, a with regard to the unrolled length of the screen self-adjusting function is obtained.

In a specific preferred embodiment of the invention, the counterforce giving the out-balancing function is given by a weight, which is arranged in a wire or chain element, the one end of which is wound up on a wheel, which in turn is mechanically connected to one end of the cylinder. The force that is given by this weight is so dimensioned that the screen strives to be unrolled at a rate that is just about enough to bring it down. Under the prerequisite that the details allowing the movement of the screen are enough easy going, a favourable adjustment accuracy is hereby achieved, which has not been able to be achieved before.

Using an extended wire or chain element the rolling-up of the weather seal may easily be made manually. It is thereby suitable to provide the wire or chain element with some kind of fixation in order to fixate the weather seal and its upper position.

When the screen is subject to forceful windload it may show useful to provide the screen with edge elements (not shown), which both when the screen is in movement as when it is at rest are kept along longitudinal control means (not shown) along the sides the screen. Hereby a weather seal is achieved that always is tight independently of the present windload.

Especially in those cases wherein the roll-up movement of the screen is to be made by using an electrical motor it is suitable to use an motor like a tube motor arranged in the interior of the tube. Such a tube motor should be able to be combined with an electrically controllable brake for keeping the screen at a specific position, which should provide a very elegant and well protected arrangement of both the motor and its brake arrangement.

In this context the maintenance aspects should specially be considered.

Further embodiments are described in dependent claims 6-9. A method for operating an arrangement according to claim 8 or 9 is defined in claim 10.

The invention will below be more closely described with reference to a specific embodiment shown on the enclosed drawing, in which,

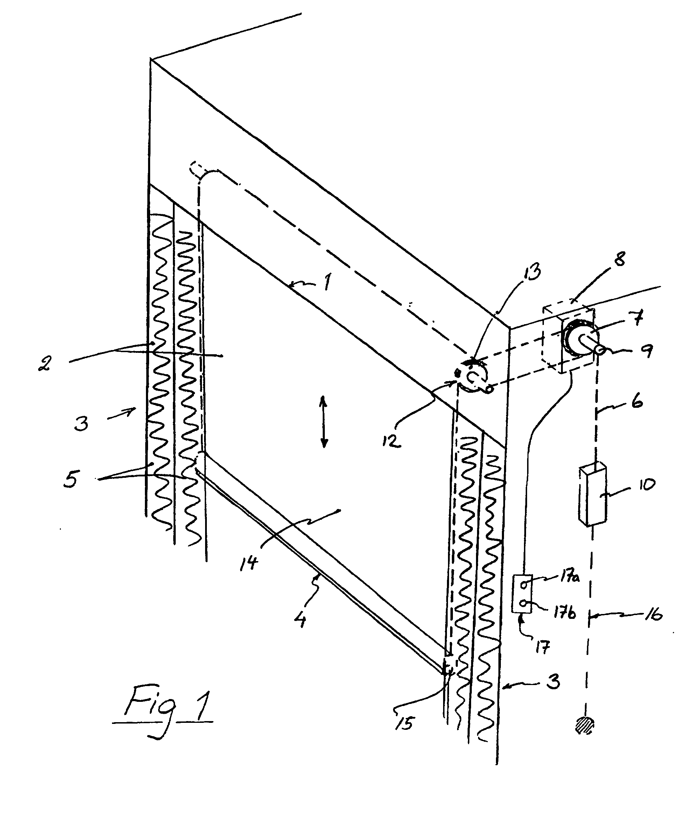

Fig 1 shows a schematic perspective view of one upper as well as side parts of a weather seal with an arrangement according to the invention.

Fig. 1 shows schematically in a view an upper part of a weather seal 2 in connection with a loading/unloading opening 1 of a building or a warehouse. The weather seal comprises sideparts 3 and an upper part 4. The sideparts 3 may be of any conventional kind, such as foldable elements provided with rubber edges, while the ones here shown partially and schematically are rubber cushions or air cushion elements 5 able to be inflated. Such side portions 3 will in its uninflated condition admit for an arbitrary location of a load carrier, such as a truck or trailer, connected to such truck, within the frames of the opening 1 (not shown). After the arbitrary location, the air elements 5 of the side portions 3 are inflated in such a way that they coincide with the sides of the load carrier (not shown).

Moreover, an upper portion 3 according to the invention is shown in Fig. 1 with concealed contours. The upper portion in the shown embodiment is of the electrically powered kind, which is not completely necessary, however, convenient. When the weather seal 2 is in its active position, i.e. when it connects to a load carrier, it is released from its drive using an electrically powered clutch C, and is only effected by the force of gravity.

A cable/chain 6 is conveyed around a pinion 7 on the shaft 9 of en electrical motor 8. At the end of the chain 6 there is a weight 10. By the fact that a pinion has a drive connection 11 to a wheel 12 at one end of a cylinder 13, the screen 14 of the weather screen, which is rolled up on the cylinder 13, will be out-balanced by a suitable choice of a weight 15 contained in the screen 14 as well as the weight 10, that the screen when the clutch C is disconnected will strive towards its extended position. Since the influence of the weight in the screen is eliminated when the screen lie against the portion of a load carrier, the screen will follow all possible vertical movements of the load carrier.

In its simpler embodiment (not shown), the arrangement according to the invention does not have any motor 8. By the fact that the screen 14 and its weight 15 are so chosen that the screen strives towards unrolled position, it is, however, possible to arrange a wire of the suitable kind in the lower end of the weight, which is to be used when this screen is to be brought up to make it possible to drive away the load carrier. In this connection any suitable arrangement may be used in order to fix the line in a desired position, corresponding to the brought up position of the screen 14. The invention is of course possible to modify in different ways within the realm of the claims enclosed.

## Claims

1. Arrangement at a weather seal (2) at a loading/unloading opening (1) of a building, comprising an upper portion (4) as well as two side portions (3), which are adjustable with regard to their extension in order to make an adaption thereof possible to the design of a lorry or a load carrier, the upper portion (4) of the weather seal (2) comprising a screen (14) which can be rolled over a cylinder (13), the screen at its lower edge comprising one or more weights (15), **characterised in that** the weather seal has a counteracting force acting upon the cylinder (13) which counteracts the weight or the weigths (15), and **in that** the counteracting force is smaller than the force caused by the weights (15).

2. Arrangement according to claim 1, **characterized in that** the counterforce that achieves the balancing is given by a further weight (10), which is arranged in a wire or chain element (6), which in its one end is rolled onto a wire wheel (12), which is mechanically connected to one end of the cylinder.

3. Arrangement according to claim 2, **characterized in that** a manual roll up of the screen element may be made by using an extension (16) of the wire or chain element.

4. Arrangement according to anyone of the preceding claims, **characterized in that** the screen (14) comprises edge elements, which during movement of the screen upwards and downwards are conveyed through longitudinal conveyor elements along the longitudinal sides of the screen (14).

5. Arrangement according to anyone of the preceding claims **characterized in that** the driving of the roll-up movement of the screen (14) is achieved by the aid of an electrical motor (8).

6. Arrangement according to claim 5, **characterized in that** the electrical motor (8) comprises a tube motor the rotational speed of which is reduced by the use of a transmission.

7. Arrangement according to claim 6, **characterized in that** the tube motor has a manoeuvre system (17), comprising means (17a, b) both for achieving a roll-up movement and thereafter for achieving a locking function with an electrically controllable brake to counteract the force from the weight element/elements (15) in the retracted position of the screen, and for achieving a release of the brake.

8. Arrangement according to claim 7, **characterized in that** the electrical control of the release brake is made via a step relay, in such a way that when the cylinder has reached a position corresponding to a maximum rolled up screen, the control system (17) activates the release brake.

9. Arrangement according to claim (8), **characterized in that** the step relay function is integrated in the electrical control system of the tube motor and that the function is achieved by the use of a by stable flip-flop and a solenoid.

10. Method for operating an arrangement according to claim 8 or 9, **characterized in that** a deactivation of the release brake is made after performing the positioning of a load carrier, whereby the step relay/flip-flop takes its inverted position, in which the balanced relation between the weights in the screen and wire/chain respectively makes the screen unroll until it reaches the upper portion of the load carrier.

## Patentansprüche

1. Vorrichtung an einer Abdichtung an einer Öffnung (1) eines Gebäudes zum Be-/Entladen, bestehend aus einem oberen Teil (4) sowie zwei seitlichen Teilen (3), welche in ihrer Ausdehnung dergestalt verstellbar sind, dass sie an die Abmessungen eines LKW oder einer Transportvorrichtung angepasst werden, wobei der obere Teil (4) der Abdichtung (2) aus einer Abdichtungsplane (14) besteht, welche auf einen Zylinder (13) aufgerollt werden kann, wobei die untere Seite der Abdichtungsplane durch ein oder mehrere Gewichte (15) beschwert ist, **dadurch gekennzeichnet, dass** die Abdichtungsvorrichtung ein auf den Zylinder (13) einwirkendes Gegengewicht aufweist, und dass die Kraft des Gegengewichtes kleiner als die durch die Gewichte (15) hervorgerufene Kraft ist.

2. Vorrichtung nach Anspruch 1, **dadurch gekennzeichnet, dass** die entgegenwirkende Kraft durch ein zusätzliches Gewicht (10) erzielt wird, welches aus einem Stahlseil oder einer Kette (6) besteht; welche/s mechanisch an einem Ende des Zylinders befestigt ist.

3. Vorrichtung nach Anspruch 2, **dadurch gekennzeichnet, dass** das manuelle Aufrollen der Abdichtungsplane mittels einer Verlängerung (16) des Stahlseils oder der Kette erfolgen kann.

4. Vorrichtung nach einem der vorstehenden Ansprüche, **dadurch gekennzeichnet, dass** die Abdichtungsplane (14) an ihren Kanten Vorrichtungen aufweist, welche während des Auf- und Abbewegens der Abdichtungsplane geführt werden durch längsseitig verlaufende Führungselemente an den Längsseiten der Abdichtungsplane (14).

5. Vorrichtung nach einem der vorstehenden Ansprüche, **dadurch gekennzeichnet, dass** das Aufrollen der Abdichtungsplane (14) mit Hilfe eines Elektromotors (8) unterstützt wird.

6. Vorrichtung nach Anspruch 5, **dadurch gekennzeichnet, dass** der Elektromotor (8) aus einem Rohrmotor besteht und dessen Drehgeschwindigkeit durch ein Getriebe verringert wird.

7. Vorrichtung nach Anspruch 6, **dadurch gekennzeichnet, dass** der Rohrmotor eine Schaltvorrichtung (17) mit Schaltern (17a, b) aufweist, welche das Aufrollen und das Feststellen in der eingestellten Position mittels einer elektrisch gesteuerten Bremse, und so der Kraft der Gewichte (15) entgegenwirkt, sowie ein Lösen der Bremse ermöglichen.

8. Vorrichtung nach Anspruch 7, **dadurch gekennzeichnet, dass** die elektrische Steuerung des Lösens der Bremse mittels eines Schrittschaltrelais dergestalt erfolgt, dass die Schaltvorrichtung (17) die Bremse freigibt, wenn der Zylinder die Position bei vollkommen aufgerollter Abdichtungsplane erreicht.

9. Vorrichtung nach Anspruch 8, **dadurch gekennzeichnet, dass** die Funktion des Schaltrelais integriert ist in die elektrische Kontrollvorrichtung des Motors und dass die Funktion mittels einer stabilen Flip-Flop-Schaltung und eines Magnetschalters erreicht wird.

10. Verfahren zur Herstellung einer Vorrichtung nach Anspruch 8 oder 9, **dadurch gekennzeichnet, dass** die gelöste Bremse betätigt wird nach dem Anpassen auf die Abmessungen eines LKW, wobei das Schaltrelais/Flip-Flop die entgegengesetzte Stellung einnimmt, in welcher das ausgeglichene Verhältnis der Abdichtungsplane und dem/der Stahlseil/Kette besteht, bzw. das Herunterlassen der Abdichtungsplane bewirkt, bis diese die obere Begrenzung des LKW erreicht.

## Revendications

1. Agencement sur un dispositif (2) d'étanchéité vis-à-vis des intempéries sur une baie (1) de chargement/déchargement d'un bâtiment, comprenant une partie (4) supérieure ainsi que deux parties (3) latérales, dont l'étendue est réglable afin de pouvoir les adapter à la configuration d'un camion ou d'un support de charge, la partie (4) supérieure du dispositif (2) d'étanchéité vis-à-vis des intempéries comprenant un écran (14), qui peut être roulé sur un cylindre (13), l'écran comprenant à son bord inférieur une ou plusieurs masselottes (15), **caractérisé en ce que** le dispositif d'étanchéité vis-à-vis des intempéries a une force antagoniste agissant sur le cylindre (13), qui agit à l'encontre de la masselotte ou des masselottes (15), et **en ce que** la force antagoniste est plus petite que la force provoquée par les masselottes (15).

2. Agencement suivant la revendication 1, **caractérisé en ce que** la force antagoniste qui donne l'équilibre est donnée par une autre masselotte (10), qui est disposée dans un fil ou dans un élément (6) à chaîne qui, à l'une de ses extrémités est enroulé sur une roue (12) à fil, qui est reliée mécaniquement à une extrémité du cylindre.

3. Agencement suivant la revendication 2, **caractérisé en ce qu'**un enroulement manuel de l'élément d'écran peut être fait en utilisant un prolongement (16) du fil ou de l'élément à chaîne.

4. Agencement suivant l'une quelconque des revendications précédentes, **caractérisé en ce que** l'écran (14) comprend des éléments de bordure, qui, pendant le mouvement de l'écran vers le haut et vers le bas, sont transportés, par des éléments convoyeur longitudinaux, le long des côtés longitudinaux de l'écran (14).

5. Agencement suivant l'une quelconque des revendications précédentes, **caractérisé en ce que** l'entraînement pour le mouvement d'enroulement de l'écran (14) est obtenu à l'aide d'un moteur (8) électrique.

6. Agencement suivant la revendication 5, **caractérisé en ce que** le moteur (8) électrique comprend un moteur à tube dont la vitesse de rotation est réduite par l'utilisation d'une transmission.

7. Agencement suivant la revendication 6, **caractérisé en ce que** le moteur à tube a un système (17) de manoeuvre, comprenant des moyens (17a, b) tous deux pour obtenir un mouvement d'enroulement et ensuite pour obtenir une fonction de verrouillage avec un frein pouvant être commandé électriquement pour contrecarrer la force provenant de la masselotte ou des masselottes (15) en la position rétractée de l'écran, et pour obtenir un desserrage du frein.

8. Agencement suivant la revendication 7, **caractérisé en ce que** la commande électrique du frein à desserrer est faite par un relais à pas de façon à ce que, lorsque le cylindre à atteint une position correspondant à un écran enroulé au maximum, le système (17) de commande active le frein à desserrer.

9. Agencement suivant la revendication 8, **caractérisé en ce que** la fonction de relais à pas est intégrée dans le système de commande électrique du moteur à tube et **en ce que** la fonction est obtenue par l'utilisation d'une bascule stable et d'un solénoïde.

10. Procédé pour faire fonctionner un agencement suivant la revendication 8 ou 9, **caractérisé en ce que** l'on désactive le frein à desserrer après avoir effectué le positionnement d'un support de charge, le relais à pas/bascule prenant sa position inversée, dans lequel la relation équilibrée entre la masselotte dans l'écran et le fil/chaîne faisant respectivement que l'écran se déroule jusqu'à ce qu'il atteigne la partie supérieure du support de charge.
